# EUROPEAN PATENT APPLICATION

(11) **EP 4 462 574 A1**
(43) Date of publication of application: **13.11.2024**
(21) Application number: 23172998.9
(22) Date of filing: 12.05.2023
(51) Int. Cl.: H01M 50/291, H01M 50/293

(54) **BATTERY SUB-ASSEMBLY WITH A SWELLING COMPENSATOR**

(71) Applicant: Newfrey LLC, New Britain, CT 06053 (US)
(72) Inventor: AKBARINIA, Alireza, 35394 Gießen (DE); BOERGER, Kai, 35394 Gießen (DE); STAU, Bastian, 35394 Gießen (DE); WILFER, Jannik, 35394 Gießen (DE)
(74) Representative: SBD IPAdmin

(57) **Abstract**

Battery module, battery subassembly and spacer for swelling compensation, wherein the spacer adapted to be arranged between a first and a second battery cell and comprises a flat body (20) and a plurality of ribs (22) projecting from the flat body toward the first and/or second battery cell, and wherein the surface covered by the ribs in the outer region of the spacer is greater than the surface covered by the ribs in the inner region of the spacer.

## Description

The present invention relates to a battery sub-assembly and a battery module. The field of the invention is for instance that of batteries for hybrid or electric vehicles in which the energy is stored in a storage rechargeable battery. More particularly the invention relates to compensation systems for the swelling of electrochemical cells constituting a battery.

As the technology for electric vehicle continues to evolve, there is a need to provide improved power sources, particularly battery subassemblies, for such vehicles. For example, it is desirable to minimize the complexity and the weight of battery subassemblies, to decrease the costs associated with manufacturing, to better manage thermal propagation within such battery subassemblies and to improve their performance. A rechargeable or secondary battery differs from a primary battery in that it can be repeatedly charged and discharged, while the latter provides only an irreversible conversion of chemical to electrical energy. High-capacity rechargeable batteries are used as the power supply for hybrid and electric vehicles and the like.

In the present context, the terms "battery cell", "battery module", "battery section," and "battery pack" (as well as their shortened variants "cell", "module", "section", and "pack") are used to describe different levels of components of an overall battery assembly or battery apparatus. Conventionally a battery cell (for example a Li-ion battery cell) comprises a housing system and a battery cell material encapsulated within the housing system. The battery cell material includes one or more cathodes, one or more anodes, an electrolyte and a separator composed from a porous polymer or other suitable material to avoid direct contact between the electrodes. Numerous individual battery cells form the building blocks of battery modules. Multiple battery modules in turn make up a battery pack. Building units of battery module, battery module or battery pack may each be defined as a battery sub-assembly.

Each battery module mounted in a middle or large-sized battery pack is generally manufactured by stacking a plurality of battery cells with high integration in a housing. In this case, the battery cells are stacked in a state in which the battery cells are arranged at predetermined intervals such that heat generated during charge and discharge of the battery cells can be removed. For example, the battery cells may be sequentially stacked in a state in which the battery cells are arranged at predetermined intervals with a gap between each battery cell.

In general, rechargeable batteries include an electrode assembly including a positive electrode, a negative electrode, and a separator interposed between the positive and negative electrodes, a casing receiving the electrode assembly, and electrode terminals electrically connected to the positive and negative electrodes of the electrode assembly, respectively. An electrolyte solution is injected into the casing in order to enable charging and discharging of the battery via an electrochemical reaction of the positive electrode, the negative electrode, and the electrolyte solution.

There exist battery cells in various sizes and shapes, such as cylinder cells, for example, or flat cells, such as prismatic cells or so-called pouch cells. Pouch cells have a flexible housing, which, as a rule, is composed of aluminium foil that is coated with plastic on both sides. Flat cells, such as pouch cells or prismatic cells, are preferred in regard to a better heat dissipation and stackability.

During charging of a battery cell, for example of a battery cell of lithium-ion type, swelling of the casing of the battery cell occurs. In the case of a cell of prismatic format (also called prismatic cell), swelling occurs essentially on the two lateral planar opposite faces the biggest ones of the casing. This swelling is amplified while the state of charge of the battery cell moves closer to the completely charged state. As the cells are joined behind each other in the housing and each cell experiences an increase in its thickness, a notable increase in the total length of the battery is seen, resulting from the sum of the increases in thicknesses of the cells. Because the housing is generally constituted by a rigid material and the gap between the cells and the walls of the housing is limited, swelling of the cells subjects the walls of the housing to pressure forces which may lead to its irreversible deformation, or a premature aging of the cells, or even to the battery being damaged. As a consequence, a device which prevents the housing from deforming under the effect of the swelling of the cells during their charge may be used.

For instance it is known to insert a spring or a deformable piece between two faces of two cells. It is also known to use a flat compression pad made for example in a silicon based material.

Document EP3208866A1 discloses a battery with two prismatic cells separated by a flexible wedge and a rigid wedge. The wedges are in plastic material. The function of the rigid wedge is to keep the distance between two adjacent cells constant, playing the role of a spacer. The function of the flexible wedge is to absorb the increase in thickness of the cell with which it is associated during charging of the cell. However, the plastic material does not allow to have a precise and reliable compression resistance.

Document EP3963645A1 also discloses a pressure module in particular for Lithium-Ion battery cells. The pressure module comprises an outer covering, which surrounds a cavity that has a channel structure. The channel structure conveys a heat transfer medium. This arrangement provides a good thermal management but is cumbersome and complex with the channel structure to convey the heat transfer medium.

US2015079428A1 is directed to a battery module comprising a plurality of battery cells aligned in one direction, the plurality of battery cells each having a vent on a top surface thereof; and
at least one vent cover covering the vent and covering side surfaces of the plurality of battery cells. The vent cover may include a first cover covering the vent; and second covers extending at sides of the first cover, the second covers each covering a side surface of a battery cell of the plurality of battery cells. The second covers may press inwardly on side surfaces of the battery cell of the plurality of battery cells.

Document JP 2014107217 describes an element of generally prismatic format, in which two opposite side faces of the container of the element have a bulge. This bulge is located near the center of each face. A resin wedge is placed between two neighboring electrochemical elements. This wedge has the particularity of having a variable thickness. The part of the spacer located in contact with the bulge has a lower thickness than the part located at the ends of the spacer in contact with the periphery of a face of the element.

An object of the present disclosure is to provide an improvement over the above-described systems. It is therefore an object of the present invention to provide a compact and reliable system which prevents variation in dimensions of a battery sub-assembly. It is also an object of the present disclosure to provide a lightweight system which applies a constant force on the cell surface.

Accordingly, the present invention provides a battery sub-assembly comprising a first and a second battery cell, and a spacer extending between the first and the second battery cell, wherein the spacer comprises a flat body and a plurality of ribs projecting from the flat body toward the first and/or second battery cell, and wherein the surface covered by the ribs in the outer region of the spacer is greater than the surface covered by the ribs in the inner region of the spacer.

The inner region is the region disposed in the center of the spacer and the outer region surrounds the inner region. More particularly, the inner region corresponds to up to 50% of the surface of the body being disposed in the center of the spacer, wherein the outer region corresponds to the remaining surrounding surface. Thus, the inner region may absorb greater volume expansions due to a swelling phenomenon of the battery cells than the outer region. The stiffness near the edge is greater than the stiffness in the middle. The spacer is easy to manufacture, can be done in a lightweight material, and ensure the application of a defined force that counteracts the expansion of the prismatic cells.

The outer region comprises a first ribs concentration, the inner region comprises a second ribs concentration and the first ribs concentration is greater than the second ribs concentration. For instance, 70% of the ribs are located within the outer region.

In an embodiment, the body has a first and a second surface opposite the first surface, and wherein the ribs extend from the first and the second surface. The same forces and efforts apply on both sides of the spacer, such that the swelling compensation is reliable.

In an embodiment, the spacer is entirely made of plastic material, for instance an elastomer, a thermoplastic elastomer or an ethylene propylene diene monomer rubber. The spacer thus generates a constant force on the cells using only an elastic deformation, increasing the life span of the spacer, without any risk of damage to the cells.

In an embodiment, the spacer has a hardness of up to 40 Shore A according to the standard ASTM D 2240, and more particularly a hardness of up to 30 Shore A according to the standard ASTM D 2240.

In an embodiment, the body has a thickness between 0.1 mm and 2mm. The sub-assembly thus remains compact.

In an embodiment, the ribs have a thickness between 0.2 mm and 3 mm, and in particular between 0.9 mm and 1mm. The thickness of the ribs may be greater than the thickness of the body. The thickness of the ribs may be 30 to 40% higher than the thickness of the body. The sub-assembly thus remains compact.

In an embodiment, the thickness of the ribs remains constant.

In an embodiment, at least part of the ribs has a curved shape. The curved shape allows a better repartition of the retaining forces during the swelling.

In an embodiment, at least part of the ribs forms a straight line.

In an embodiment, the ribs form a symmetrical pattern. Thus, the compression forces are evenly distributed.

In an embodiment, the body has a parallelepipedal shape and each corner comprises a plurality of ribs extending sensibly parallel to each other.

In an embodiment, the first and the second battery cells are prismatic cells.

In an embodiment, the center 5or center point or center spot) of the body does not comprise any ribs.

The present disclosure is also directed to a battery module comprising a plurality of battery sub-assemblies as already described and such that between two battery cells, at least one spacer is arranged.

The present disclosure will by way of example be described in more detail with reference to the appended schematic drawings, which show examples of the present disclosure.
Fig. 1 shows schematically a battery module with a plurality of battery sub-assemblies according to the invention, wherein the battery sub-assemblies each comprises a spacer arranged between two battery cells;
Fig. 2 shows a front view of the spacer according to a first embodiment of the invention;
Fig. 3 schematically shows a spacer according to a second embodiment of the invention.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

In some cases, well-known features, structures, or operations are not shown or described in detail. Furthermore, the described features, structures, or operations may be combined in any suitable manner in one or more embodiments. It will also be readily understood that the components of the embodiments, as generally described and illustrated in the figures herein, could be arranged and designed in a wide variety of different configurations.

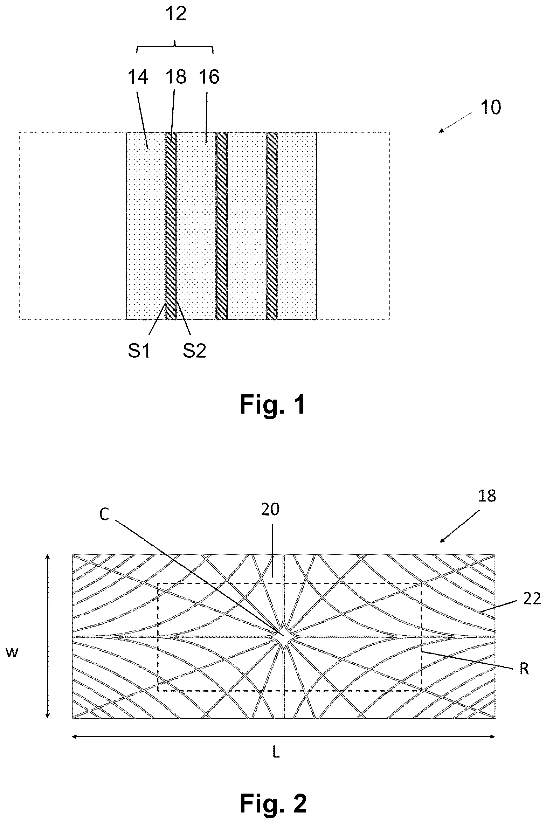

A battery module 10 as visible in Fig. 1 comprises a plurality of battery sub-assemblies 12. The invention will be described below in reference to electrochemical cells of prismatic shape, but the skilled person could possibly apply it to cells of cylindrical format.

Each battery sub-assembly 12 comprises a first and a second battery cell 14, 16. The battery cells may be of prismatic format (also called prismatic cell) or pouch cells or cylindrical cells or blade cells. A spacer 18 extends between the first and the second battery cell 14, 16. The spacer 18 is entirely made for instance in plastic material and comprises a body 20 and a plurality of ribs 22 projecting from the body 20. The body 20 is for instance flat and comprises a first surface S1 adapted to face the first battery cell 14 and a second surface S2 adapted to face the second battery cell 18. The body 20 may have a parallelepipedal shape. The body 20 has a length L corresponding for instance to the length of the first or second battery cell. In another embodiment, the length L of the body may be sensibly smaller than the length of the first or second battery cell. The length of the body may be of about 250 mm, for example. The width w of the body may also correspond or sensibly correspond to the width of the first or second battery cell. The width w may also be sensibly smaller than the width of the first or second battery cell. The width w of the body may be of about 100 mm. The ribs 22 are arranged on the first and/or on the second surface S1, S2 of the body. More particularly, the ribs 22 are arranged on the first and on the second surface of the body and are projecting from the flat body toward the first and/or the second battery cell. However, in an embodiment, the ribs may project from one surface only.

The ribs 22 are arranged such that the surface covered by the ribs 22 in the outer region of the spacer is greater than the surface covered by the ribs in the inner region (see dotted area R in Fig. 2) of the spacer 18. The inner region R of the spacer corresponds to the region of the first or second surface in the center of the spacer and the outer region surrounds the inner region. More particularly, the inner region R corresponds to up to 50% of the surface of the body being disposed in the center C of the spacer 18, wherein the outer region corresponds to the remaining surrounding surface.

For instance, the center point C of the first or second surface S1, S2 may not comprise any rib. The ribs project from the body and have a thickness of about 0.9 mm. The entire thickness of the spacer (comprising the ribs and the body) is of about 3 mm in a rest-position (i.e. when no force is applied to the spacer). However, in other embodiment, the thickness of the spacer may be between 0.5 mm and 5 mm or 10 mm. The entire thickness of the spacer includes the thickness of the body and the thickness of the ribs. The thickness of the ribs remains constant.

Some ribs may have a curved shape, whereas some other ribs may have a straight-line shape. The ribs 22 may form a symmetrical pattern such that a mirror symmetry exist in one and/or another direction.

Fig. 2 shows for instance the first or second surface S1, S2 of the spacer 18. It is to be noted that the ribs arrangement of the first surface and the ribs arrangement of the second surface may be identical. As depicted in Fig. 2, the ribs 22 are arranged such that a first straight rib and a second straight rib are arranged orthogonal to each other and cut the surface plane in half. The center C of the surface does not comprise any rib. More particularly the first straight rib is interrupted in its center and the second straight rib is interrupted in its center. The first and second straight ribs delimit quarter of the spacer surface, and each quarter may also be sub-divided by a third straight line linking two opposite corners of the spacer. The third straight rib is also interrupted in the center of the spacer. Another fourth straight rib may be arranged between the first straight rib and the third straight rib. A fifth straight rib may be arranged between the second straight rib and the third straight rib. In any case, the straight ribs are all interrupted in the center C, or at the center sport of the first or second surface for few millimeters.

Each corner of the spacer is arranged with curved ribs. The curved ribs may be sensibly parallel to each other. The curved ribs may be convex when viewed from the center of the spacer. The density of the ribs in the corner is higher than the density of the ribs in the center or around the center. Thus, the inner region R may absorb greater volume expansions due to a swelling phenomenon of the battery cells than the outer region. The outer region has a greater rigidity than the inner region, and the material remain the same. The elasticity of the inner region is thus higher.

As visible in Fig. 2, the spacer has two mirror symmetry.

As mentioned above, the spacer 18 is entirely formed in a plastic material, such as an elastomer, a thermoplastic elastomer or an ethylene propylene diene monomer rubber. The spacer has a hardness of up to 60 Shore A according to the standard ASTM D 2240. More particularly a hardness of up to 30 Shore A according to the standard ASTM D 2240.

A simulation of multiple charging and discharging cycles of the battery have shown a high repeatability of the spacer and the sub-assembly behaviour. During charging of the battery cells 14, 16, swelling appears on the lateral walls of the cells, as mentioned in the preamble of the application. The swelling subjects the spacer(s) arranged between the cells to a load increase. The load applied to the spacer during charging can be up to 1 Megapascal. During the discharge, the swelling decreases as well as the applied load.

Tests have shown with the design as visible in Fig. 2 and a particular size of 100 mm (width w) by 250 mm (length L), a repeatable force-displacement curve during multiple charging and discharging cycles of the battery simulation. At a pressure of 1 MPa (Mega Pascal), a compression of the spacer of up to approx. 1.47 mm is achieved with a rest-position spacer thickness of 2.7. This compression value stays constant during the different load cycle simulations.

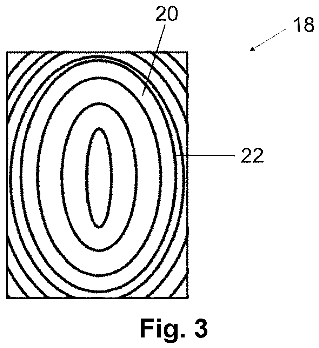

As visible in Fig. 3, other arrangements and distributions of the ribs on the surface of the spacer may be implemented. In a second embodiment, a plurality of curved ribs 22 is arranged. Fig. 3 shows a plurality of concentrically arranged ovals ribs. The distance between two ribs at the periphery (or in the outer region) of the spacer is less than the distance between two ribs in the inner region of the spacer.

The spacer 18 is mounted preloaded between the first and the second battery cell 14, 16. In a preloaded-state, the spacer may a total thickness of about 2.7 mm.

The present invention resolves the problem of the swelling of prismatic or cylindrical or pouch battery cells when they are stacked or assembled side by side and allows to maintain the thermal isolation between cells. Compression of electrodes, necessary for preserving the strength of the active material of the battery cells is ensured, however. Thus, the battery formed by a plurality of battery sub-assembly presents a constant length over time. No dilatation occurs within the battery casing.

## Claims

1. Battery sub-assembly (12) comprising:
- a first and a second battery cell (14, 16);
- a spacer (18) extending between the first and the second battery cell,
wherein the spacer comprises a flat body (20) and a plurality of ribs (22) projecting from the flat body toward the first and/or second battery cell, and wherein the surface covered by the ribs in the outer region of the spacer is greater than the surface covered by the ribs in the inner region of the spacer.

2. Battery sub-assembly (12) according to claim 1, wherein the spacer (18) is entirely made of plastic material, for instance an elastomer, a thermoplastic elastomer or an ethylene propylene diene monomer rubber.

3. Battery sub-assembly (12) according to claim 1 or 2, wherein the spacer has a hardness of up to 60 Shore A according to the standard ASTM D 2240, and more particularly a hardness of up to 30 Shore A according to the standard ASTM D 2240.

4. Battery sub-assembly (12) according to any of claims 1 to 3, wherein the body (20) has a first and a second surface opposite the first surface, and wherein the ribs extend from the first and the second surface.

5. Battery sub-assembly (12) according to any of claims 1 to 4, wherein the body has a thickness between 0.1 mm and 2 mm.

6. Battery sub-assembly (12) according to any of claims 1 to 5, wherein the ribs (22) have a thickness between 0.2 and 3 mm.

7. Battery sub-assembly (12) according to any of claims 1 to 6, wherein the thickness of the ribs (22) remains constant.

8. Battery sub-assembly (12) according to any of claims 1 to 7, wherein at least part of the ribs (22) has a curved shape.

9. Battery sub-assembly (12) according to any of claims 1 to 8, wherein at least part of the ribs (22) forms a straight line.

10. Battery sub-assembly (12) according to any of claims 1 to 9, wherein the ribs (22) form a symmetrical pattern.

11. Battery sub-assembly (12) according to any of claims 1 to 10, wherein the body has a parallelepipedal shape and each corner comprises a plurality of ribs extending sensibly parallel to each other.

12. Battery sub-assembly (12) according to any of claims 1 to 11, wherein the first and the second battery cells (14, 16) are prismatic cells or blade cells or pouch cells.

13. Battery sub-assembly (12) according to any of claims 1 to 12, wherein the spacer is preloaded between the first and the second cells, such that a compression of the spacer occurs, and the total thickness of the spacer is decreased by about 10 % compared to a rest position in which no force is applied to the spacer.

14. Battery module (10) comprising a plurality of battery sub-assemblies (12) according to any of the preceding claims and being such that between two battery cells (14, 16) at least one spacer (18) is arranged.

15. Spacer (18) of a battery sub-assembly (12) according to any of claims 1 to 13, wherein the spacer comprises a flat body and a plurality of ribs projecting from the flat body, and wherein the surface covered by the ribs in the outer region of the spacer is greater than the surface covered by the ribs in the inner region of the spacer.
